# EUROPEAN PATENT APPLICATION

(11) **EP 3 766 839 A1**
(43) Date of publication of application: **20.01.2021**
(21) Application number: 19767541.6
(22) Date of filing: 15.03.2019
(51) Int. Cl.: C02F 3/02, C02F 3/12, C02F 9/12, C02F 9/14

(54) **METHOD FOR TREATING WASTEWATER WITH ORGANIC MATERIAL IN CONTINUOUS FLOW WITH AEROBIC GRANULAR BIOMASS**

(30) Priority: 16.03.2018 CL 20180714
(71) Applicant: Universidad Adolfo Ibanez, Santiago, 7941169 (CL); Universidade de Santiago de Compostela, 15782 Santiago de Compostela, A Coruña (ES)
(72) Inventor: CAMPOS, José Luis, 7941169 Santiago (CL); COFRÉ, Constanza, 7941169 Santiago (CL); VALENZUELA, Daniel, 7941169 Santiago (CL); PAVISSICH, Juan Pablo, 7941169 Santiago (CL); PEDROUSO, Alba, 15782 Santiago de Compostela (ES); CARRERA, Paula, 15782 Santiago de Compostela (ES); VAL DEL RÍO, Ángeles, 15782 Santiago de Compostela (ES); MOSQUERA, Anuska, 15782 Santiago de Compostela (ES)
(74) Representative: Elzaburu S.L.P.
(86) International application number: PCT/CL2019/050015
(87) International publication number: WO 2019/173930

(57) **Abstract**

Continuous method of wastewater treatment with organic matter with granular biomass comprising: a) a first complete-mix aerobic reactor with granular biomass, where the treated water flows into a second reactor, b) a second complete-mix aerobic reactor with granular biomass, c) a decanter with a liquid surface velocity greater than or equal to 1 m/h, d) recovering the treated water from the decanter supernatant. Where the volume of the first aerobic tank is between 1/10 to 1/3 (or 10 to 33%) of the total reaction volume, the aeration in both tanks is applied at a surface velocity of between 0.5 to 5 cm/s and the granular biomass decanted in (c) is recirculated to the first reactor at the same time that biomass is allowed to pass from the first reactor to the second reactor at a recirculation ratio of 0.25 to 1. Where these conditions allow the formation and maintenance of granules of aerobic biomass in continuous flow.

## Description

### FIELD OF THE INVENTION

The invention aims at a continuous system for the biological treatment of wastewater with organic matter using aerobic granular biomass, suitable for large volumes of wastewater with organic matter, such as municipal and/or industrial sewage.

### BACKGROUND OF THE INVENTION

The current biological systems of activated sludge used for the treatment of wastewater have limited loading and nutrient removal capacities due to the low sedimentation rate of the biomass, so large surface areas are required for their implementation. This is a limitation when, for example, given the growth of the population, it is necessary to expand the treatment plants, especially in large cities where the available area is limited.

In this way, one of the most critical aspects of the activated sludge process has always been the separation of biomass and treated water. To solve this problem, physical separation techniques have been developed, such as membrane bioreactors; and on the other hand, how to improve the sedimentation properties of activated sludge has been an important research topic. Within this area there are methods for obtaining granular biomass.

The basic requirement for biomass to have good sedimentation properties is to obtain compact, dense and large granular structures with a high specific gravity. These characteristics allow the granular sludge to separate from the treated water much faster, reducing the need for large external decanters. This allows for the retention of more biomass in the system, thus increasing its capacity, being able to reduce its implantation area by up to 75%. On the other hand, the use of this technology can also lead to a 75% reduction in post-treatment sludge.

Given these advantages, aerobic granular biomass technology is already being applied on an industrial scale in about 30 sewage treatment plants, mostly in Europe (Holland and Ireland) and South America (Brazil). Said plants have shown to be capable of maintaining high efficiencies for eliminating organic matter and nutrients, with lower energy consumption than conventional systems.

However, until now the use of this technology has been applied in sequential discontinuous systems, or in continuous vertical fluidized bed or airlift systems where both options allow efficient treatment of relatively low wastewater flows. It had not been possible to date to obtain a continuous organic wastewater treatment system with planar geometry that allows the formation and operational maintenance of granular biomass. As we indicated, aerobic granular biomass has many advantages over conventional aerobic sludge biomass, among them efficiency, so the formation of granular biomass in a continuous system would allow the use of existing active sludge treatment plants which are continuous, and improve the efficiency of the system, allowing the treatment of larger volumes of wastewater in less time. On the contrary, the application of granular biomass technology in sequential discontinuous systems, or in continuous systems of the airlift type, as has been done up to now, requires the construction of new treatment plants specially adapted for these processes. The replacement of the current continuous activated sludge systems with continuous granular biomass systems would allow for the treatment of 2 to 3 times more wastewater flow without the need to expand the treatment plant and, if necessary, processes for the removal of nutrients such as nitrogen compounds and phosphorus can be provided. In other words, the process of the invention would allow for the use of existing activated sludge systems for large cities, which are continuous, and since the granular biomass is more efficient than the traditional, it would allow for the treatment of a greater volume of wastewater without the need to build new facilities, with the significant cost savings that this entails. On the other hand, until before the present invention, if you wanted to adopt granular activated sludge in existing discontinuous systems, this mostly involved building or implementing new plants which had to be started from scratch, or by trying to modify the hydrodynamic regime of the existing treatment plants, which is not always possible or is too expensive, since many times it is necessary to change the pumping system of the plant.

Faced with this problem, the inventors have succeeded in designing a system that uses aerobic granular biomass technology for wastewater with organic matter that operates in continuous flow, and not discontinuous like the aerobic granular biomass technologies already available on the market. This new system can be applied, with few operating and engineering changes, in already installed activated sludge systems, as well as, of course, new wastewater treatment plants that can be built to operate with the system of the invention. In the case of adapting conventional activated sludge systems to this new technology, an additional treatment area is not required, but can be implemented within the same existing treatment plants.

The invention makes it possible to generate aerobic granular biomass in continuous flow systems that operate in such a way as to impose substrate concentration and hydrodynamic conditions similar to those obtained in discontinuous flow reactors. The developed system allows to achieve volumetric load removal rates of around 4 kg COD/m³·d, substantially higher than those of conventional activated sludge systems, which treat loads around 1 kg COD/m³·d, and to obtain an effluent of similar or better quality.

Thus the present invention relates to the sanitary engineering industry. In particular, the present invention relates to a method of treating wastewater with organic matter using continuous flow aerobic granular biomass.

### STATE OF THE ART

The invention refers to a continuous wastewater treatment system with organic matter using aerobic granular biomass, where the system comprises two aerobic stages with granular biomass and a decanter with recirculation of biomass. The prior state of the art accounts for sewage treatment systems with aerobic granular biomass, where the majority are in lots or batches. These known systems are, like all batch processes, useful and efficient for relatively small flows, but until now it has not been possible to bring this technology to a continuous process that allows for treating high flows such as those processed in large cities. An example of a batch granular biomass wastewater treatment process is described in US2014224729 A1 (2014-08-14). Other systems suitable only for small communities that generate low wastewater flow are vertical mixing fluidized bed or airlift reactors, as described in application CN105692882 A (2016-06-22).

For the person skilled in the art, it will be clear that reactor systems for treating sewage or other types of water treatment are known in the state of the art, comprising two connected aerobic reactors and a decanter. This known system, although essential to carry out the process of the invention, is not the invention in itself. The invention is the method of operation of these reactors that allows the operational formation of granular aerobic biomass in a continuous system. Results that had not been obtained until the present invention.

### DESCRIPTION OF THE FIGURES

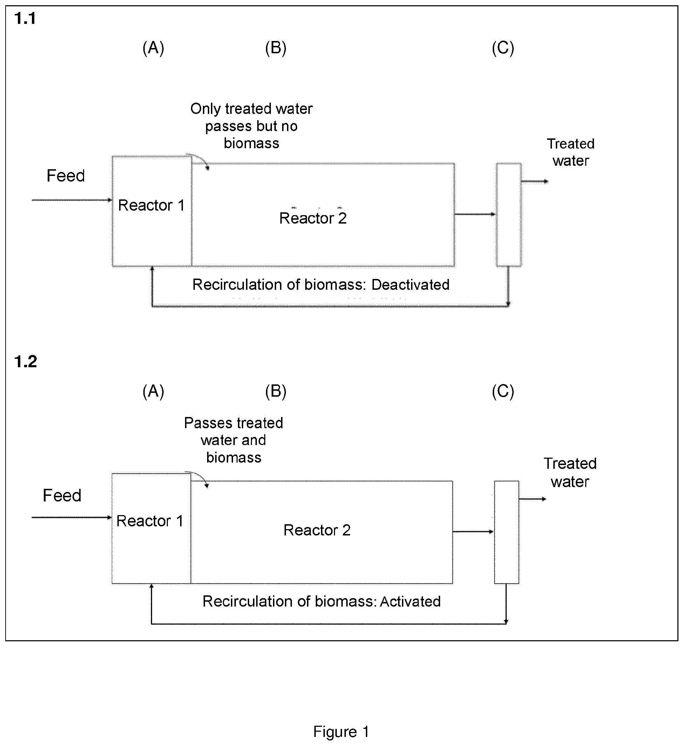

Figure 1. A preferred system of the invention is outlined, where the influent reaches a first aerobic reactor (A), then passes to a second aerobic tank (B), and finally to a decanter (C), where the supernatant is the effluent of the system and the decanted biomass is recirculated to the first aerobic tank and where it can be purged. The recirculation of biomass is activated and deactivated during the operation of the system.

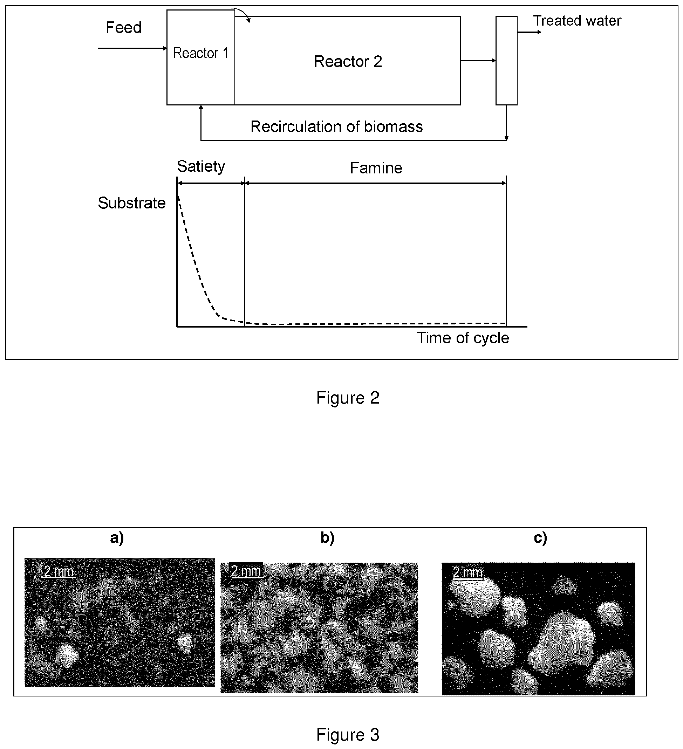

Figure 2. Relationships between the operating conditions of the proposed continuous system and the operating cycle of a discontinuous system. In the upper figure the process of the invention of 2 aerobic reactors connected by overflow and subsequently a decanter is outlined. In the lower figure the concentration of substrate is schematized in the time that the treatment lasts, which emulates a first phase of "Satiety", in the first reactor where the sewage arrives and later a phase of "Famine" that occurs in the second reactor.
Figure 3. Appearance of the biomass formed during different tests to generate granular biomass in continuous cycles. The various conditions are described in detail in the example, where the third proven condition corresponds to the invention.
Figure 3.a) Condition I (day 56) shows a low concentration of biomass and only some granules; Figure 3.b) Condition II (day 11) shows a higher concentration of biomass and filamentous clusters without forming granules; Figure 3.c) Condition III (day 7) shows a high concentration of well-formed granules.

### DESCRIPTION OF THE INVENTION

The invention aims at a continuous wastewater treatment system with organic matter, with granular biomass, which comprises a first complete-mix aerobic tank connected by overflow with a second complete-mix aerobic reactor, which in turn connects to a decanter operated at high liquid surface velocities.

At present, aerobic granular biomass systems are operated with sequential discontinuous systems or SBR - for its acronym in English *Sequencing Batch Reactor-*fed for a short period of time to obtain a high concentration of substrate in the liquid phase (satiety phase). Once the substrate is exhausted, the system is operated for approximately 10 times the satiety phase, which is called the famine phase, and finally there is a short decantation period in order to promote the retention of only the biomass with good sedimentation properties. In these systems the compaction of the biomass is promoted by maintaining superficial aeration speeds at values greater than 1.2 cm/s.

The method of the invention makes it possible to reproduce these operating conditions that occur throughout the operating cycle of batch reactors. The inventors have successfully replicated these conditions of the satiety, famine and decantation phases in continuous flow conditions with the system with the configuration shown in Figure 1: Continuous System A) It consists of a first complete-mix aerobic mixing tank (A) in which the substrate is brought into contact with the biomass allowing the uptake of organic matter for the formation of the polyhydroxyalkanoates (PHA) essential for the formation of granules. Subsequently, the biomass passes to a second complete-mix aerobic tank (B) where the substrate concentration is practically zero. These conditions favour the development of granular bacteria that grow from the stored PHAs. The volume of the first aerobic tank is between 1/10 to 1/3 of the total reaction volume, that is, the volume comprised by both reactors, in order to simulate the operating cycle conditions of discontinuous systems. Finally, a decanter (C) is provided that operates at high liquid surface velocities so that only the granular biomass is retained. In both aerobic tanks the necessary stress forces are maintained with an adequate airflow.

The proposed system consists of two complete-mix aerobic reactors and a settler. The wastewater is fed to the first reactor where the organic matter is consumed for the most part by the biomass present. This reactor would be equivalent to the satiety phase that occurs during discontinuous aerobic granular systems. The mixing of the reactors is carried out by aeration, the aeration speed being between 0.5 and 5 cm/s, especially equal to or greater than 1 cm/s to maintain adequate stress forces that favour the formation of granules. The treated water in the first reactor will pass to the second reactor through an overflow or an equivalent system that allows the passage of water but not that of biomass (Figure 1.1). The purpose of this is to establish a control over the time that the bacteria remain under satiety conditions, making it independent of the hydraulic residence time of the first reactor.

Since organic matter is consumed in the first tank, a famine phase similar to that which occurs during the operation cycles of discontinuous aerobic granular systems would be provoked in the second tank. In this reactor, the mixing is also provoked by aeration. Finally, the treated water-biomass mixture leaves the second reactor towards a settler where the separation takes place. The settler operates at a surface flow rate equal to or greater than 1 m/h in order to promote the washing of the flocculent biomass that may have been generated. This high surface flow velocity imposed on the system serves the same purpose as the low settling times defined in the operating cycles of discontinuous aerobic granular systems.

The settled biomass is periodically returned to the first reactor. During the period in which the biomass recirculation is carried out, the passage of the biomass present in the first reactor towards the second is promoted so that the bacteria can alternate periods of satiety and famine (Figure 1.2). Bacteria that are present in the first reactor (satiety) will go to the second (famine) and bacteria from recirculation (famine) will go to the first reactor (satiety). The passage of the biomass present in the first reactor towards the second can be given by the recirculation flow itself in the event that the reactors were connected by an overflow or by opening a conduit that communicates between both tanks.

Based on the described system, it can be established that the fraction of time to which the biomass is subjected to satiety conditions will be imposed by the ratio of the volume of the first reactor and the total volume. On the other hand, the rate of return of the biomass will serve to control the time it takes for the total biomass to undergo an alternation between conditions of satiety and famine, that is, which would be equivalent to the duration of an operation cycle in a discontinuous system (Figure 2).

Thus the invention points to a continuous method of treating organic wastewater with granular biomass that comprises:
a) mixing the organic wastewater influent in a first complete-mix aerobic reactor with granular biomass, where the treated water flows into a second reactor,
b) the water treated in (a) is incorporated in a second complete-mix aerobic reactor with granular biomass,
c) the water treated in (b) passes to a decanter with a liquid surface velocity greater than or equal to 1 m/h,
d) recovering the treated water from the decanter supernatant.

Where the complete mixture in both reactors is produced by the aeration of the reactor; which is applied at a surface velocity of between 0.5 to 5 cm/s. Additionally, the water passes from the first aerobic reactor to the second aerobic reactor by overflow or by opening a conduit that communicates between both tanks. And where the volume of the first aerobic tank is between 1/10 to 1/3 of the total reaction volume of the treatment system.

In the method of the invention the hydraulic retention time of the first reactor is between 10-90 minutes, more specifically between 15-50 minutes. And the hydraulic retention time of the second reactor is between 1-24 hours, more specifically between 1-12 hours. Additionally, the decanter has a liquid surface velocity of between 1 m/h and 10 m/h.

In the method of the invention, the granular biomass decanted in (c) is recirculated to the first reactor at the same time that biomass is allowed to pass from the first reactor to the second reactor at a recirculation ratio of 0.25 to 1, that is, the recirculation flow has a value between 25 to 100% of the inlet flow. It will be apparent to those skilled in the art that this recirculation flow rate can be obtained by regulating the time that the biomass is allowed to recirculate, or by calculating the amount of granular biomass that is recirculated.

Where the method of the invention allows the formation and maintenance of aerobic biomass granules in continuous flow.

### EXAMPLE OF APPLICATION

To obtain the formation of aerobic granular sludge, a continuous flow system composed of two fully agitated tanks was used. The objective of the first tank was to allow contact between the biomass and the substrate for a short period to promote its conversion to PHA, while, in the second tank, the concentration of the substrate should be almost zero. The second tank is connected to a decanter, as shown in Figure 1.

The system was fed with a synthetic medium that simulated the composition of domestic wastewater, which is shown in Table 1, with a COD of 500 mg/L. At the beginning of each operating period, the system was inoculated with flocculent biomass taken from the wastewater treatment plant located in Curacaví (Chile).

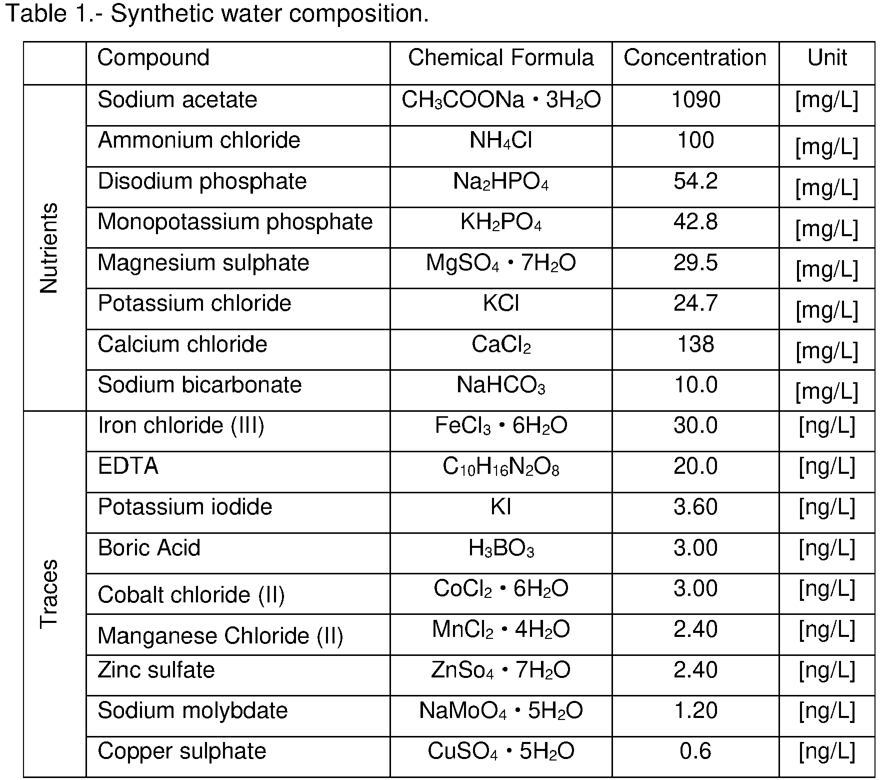

The ratio of tank volume 1/total volume was changed during the experiment to achieve a duration relationship between the phases of satiety and adequate famine (Table 2). Both tanks functioned as fully mixed flow reactors. To retain the biomass, a decanter operated at an upward flow rate greater than 1 m/h was used to carry out the washing of the biomass that did not have adequate sedimentation properties. The settled biomass was recirculated to the first tank by means of a peristaltic pump with a large diameter tube to minimize the possible disintegration of the granules.

Three conditions were studied independently, starting each time from zero, inoculating the tanks with initial flocculent biomass and operating under the indicated conditions, in order to obtain the condition of the invention that allows the formation of granular biomass in continuous flow. As can be observed, the first two conditions tested did not generate granular biomass, which is only obtained in the condition described in the invention. Table 2 indicates the characteristics of each of the conditions studied.

During Condition I, which was studied for 60 days, the formation of granules was not achieved but filamentous biomass predominated and, only on day 56, some granule-like particles appeared (Figure 3.a). This first test included a first anoxic reactor and a second aerobic reactor.

As the organic matter removal efficiency of the first tank operated under anoxic conditions was low (around 36%), during the second test, Condition II, this tank was operated under aerobic conditions. As a result of this modification, the organic matter removal efficiency increased up to 70%. On day 10 of Condition II, the formation of granule-like particles was observed but, within a few days, these particles were covered with filamentous biomass indicative of substrate limiting conditions (Figure 3.b).

**Table 2**

| | Condition I | Condition II | Condition III |
|---|---|---|---|
| Operational period (d) | 60 | 40 | 30 |
| Usable volume of Tank 1 (L) | 0.6 | 0.6 | 0.5 |
| Usable volume of Tank 2 (L) | 4 | 4 | 1.8 |
| Tank Volume 1 /Total Volume (%) | 13% | 13% | 22% |
| Hydraulic residence time (HRT) of the whole system (h) | 6 | 6 | 3 |
| Organic loading rate of the entire system (g COD/L·d) | 2 | 2 | 4 |
| HRT Tank 1 (minutes) | 50 | 50 | 42 |
| HRT Tank 2 (minutes) | 331 | 331 | 149 |
| Tank 1 | Anoxic | Aerobic | Aerobic |
| Tank 2 | Aerobic | Aerobic | Aerobic |
| Surface air speed (cm/s) | 0.5 | 2.8 | 2.8 |
| Upward flow rate in decanter (m/h) | 1.4 | 1.4 | 2.5 |
| Biomass recirculation ratio | 0.25 | 0.25 | 0.25 |

Seeking to improve the system in order to obtain the granules, a third condition was tested, in which the volume of the second tank was reduced to diminish the period in which the biomass was exposed to a very low substrate concentration, Condition III. Under these operating conditions, the formation of granules was observed with sedimentation rates between 29-113 m/h and diameters between 1.0-5.0 mm (Figure 3.b).

In this way it was possible to establish the conditions of the process of the invention, which allows the formation of granular biomass in a continuous system and a 90% elimination of organic matter is obtained, once the treatment is finished.

## Claims

1. Continuous method of wastewater treatment with organic matter with granular biomass **CHARACTERIZED in that** it comprises:
a) mixing the organic wastewater influent in a first fully mixed aerobic reactor with granular biomass, where the treated water flows into a second reactor,
b) the water treated in (a) is incorporated into a second complete-mix aerobic reactor with granular biomass,
c) the water treated in (b) passes to a decanter operated with a liquid surface velocity greater than or equal to 1 m/h,
d) recovering the treated water from the decanter supernatant.

2. Method according to claim 1 **CHARACTERIZED in that** complete mixing in both reactors is produced by aeration of the reactor.

3. Method according to claim 2 **CHARACTERIZED in that** aeration is applied at a surface velocity of 0.5 to 5 cm/s.

4. Method according to claim 1 **CHARACTERIZED in that** the water passes from the first aerobic reactor to the second aerobic reactor by overflow or by opening a conduit that connects to both tanks.

5. Method according to claim 1 **CHARACTERIZED in that** the volume of the first aerobic tank is between 1/10 to 1/3 of the total reaction volume of the treatment system.

6. Method according to claim 1 **CHARACTERIZED in that** the hydraulic retention time of the first reactor is between 10-90 minutes.

7. Method according to claim 6 **CHARACTERIZED in that** the hydraulic retention time of the first reactor is between 15-50 minutes.

8. Method according to claim 1 **CHARACTERIZED in that** the hydraulic retention time of the second reactor is between 1-24 hours.

9. Method according to claim 8 **CHARACTERIZED in that** the hydraulic retention time of the second reactor is between 1-12 hours.

10. Method according to claim 1 **CHARACTERIZED in that** the decanter has a liquid surface velocity of between 1 m/h to 10 m/h.

11. Method according to claim 1 **CHARACTERIZED in that** it recirculates the granular biomass decanted in (c) to the first reactor, while allowing the passage of biomass from the first reactor to the second reactor, with a recirculation flow whose value is 25 to 100% of the inlet flow.

12. Method according to any of the preceding claims **CHARACTERIZED in that** it allows the formation and maintenance of aerobic biomass granules in continuous flow.
